Europäisches Patentamt

European Patent Office

Office européen des brevets

(11) Publication number: **0 434 948 A2**

# EUROPEAN PATENT APPLICATION

(21) Application number: **90121516.0**

(22) Date of filing: **09.11.90**

(51) Int. Cl.⁵: **C02F 1/68, C02F 1/76**

The title of the invention has been amended (Guidelines for Examination in the EPO, A-III, 7.3).

(30) Priority: **09.11.89 ZA 898550**
**14.12.89 ZA 899548**
**01.06.90 ZA 904193**

(43) Date of publication of application:
**03.07.91 Bulletin 91/27**

(84) Designated Contracting States:
**DE ES FR IT**

(71) Applicant: **Renton, Michael Brian**
**31 - 4th Avenue, Parktown North**
**Johannesburg, 2193(ZA)**

(72) Inventor: **Renton, Michael Brian**
**31 - 4th Avenue, Parktown North**
**Johannesburg, 2193(ZA)**

(74) Representative: **Wallinger, Michael Dr.**
**Maximilianstrasse 58**
**W-8000 München 22(DE)**

(54) **Swimming pool chemical dispenser.**

(57) A swimming pool treatment device comprises cylidrical pills comprising solid water treatment material such as trichloroisocyanuric acid. A collar is surrounds the periphery of the pill so that only the end surfaces thereof are engaged by the water. Consequently there is a constant erosion of the pill material. Various containers for one or more pills are disclosed. The containers which rest on the pool floor have downward projections that permit sufficient water flow below the pill container to prevent staining of the pool floor.

Figure 5

## SWIMMING POOL ACCESSORIES

This invention relates to water treatment devices.

The invention is concerned with a water treatment device of the kind used in treating water in for example a swimming pool or other body of water (referred to herein as a swimming pool for convenience), the device comprising a water treatment pill i.e. a pill having a cylindrical periphery and end faces and comprising material that in use is slowly eroded to treat the water and hereinafter referred to as "a pill".

According to one aspect of the invention there is provided a pill having its cylindrical periphery covered with a cover of water impermeable material, the cover being open at both its ends to permit water to come into contact with only the end faces of the pill, so that these faces only will be eroded by the water and will give off chlorine gas or will so effect the water in contact therewith to treat it.

According to another aspect of the invention there is provided the combination of a pill as set forth above with a container therefor, the container having openings through which water can enter the container to come into contact with both the said faces of the pill and supporting means on which the container can be carried on the floor of a swimming pool (hereinafter referred to as "said floor") in spaced relationship therewith so that water can pass freely between the said floor and nearest side of the container.

The container preferably contains a plurality of pills, covered as aforesaid. In such a case, the covers are preferably all separate from one another.

The cover may be provided by a coating of the material on the periphery of the pill, in which case the water impermeable material preferably is such that it adheres to the pill. It is preferably a material that is capable of being sprayed on to the pill and preferably it comprises a polyurethane cement. The coating is preferably very thin and is preferably no more than about 0,5mm (nought comma five millemeters) thick.

In another arrangement of the invention, the cover comprises a collar formed separately of the pill, preferably a moulded plastics collar, into which the pill is forced. This collar is preferably provided with an internal groove on its surface abutting the periphery of the pill so that any gases which may be formed below the pill can escape up such groove.

The collar may be provided with external stops so that it may be inserted into a cylindrical mould and the pill forced into the collar, the stops preventing the collar from being forced through the mould.

The container preferably comprises a lower surface with locating means thereon to locate the pills within the container. Preferably, where the pills are coated as aforesaid, the lower surface further includes support means thereon to carry the pills spaced therefrom. The support means preferably are provided at the periphery of the pills and are relatively sharp so that after the body of the pill has eroded, the pill will be supported by the coating on the support means and the latter will not be of sufficient strength to carry the pill and will break down or be distorted so that the remainder of the pill will move towards the lower surface of the container. Thus chlorine gasses will escape from below the pill and will not give buoyancy to the lower portion of the container which may have the effect of inverting the container.

In another arrangement, the container may comprise an enlarged buoyancy chamber having a dependant hollow centre piece in which is received pills covered as aforesaid and stacked one upon the other, preferably in spaced relationship.

Embodiments of the invention will now be described by way of example with reference to the accompanying drawings in which the sizes of various parts are exaggerated for the purposes of clarity.

In the drawings:-

Figure 1 is a plan of a pill container of the invention,

Figure 2 is an underplan of the container,

Figure 3 is a horizontal cross-section of the container the section being taken on line 3 - 3 of Figure 4,

Figures 4 and 5 are respectively sections on lines 4 - 4 and 5 - 5 of Figure 3,

Figure 6 is a plan of a collar for receiving therein a pill,

Figure 7 is a section through one line 7 - 7 of Figure 6,

Figures 8 and 9 are perspective views of modified pills and collars,

Figure 10 is a vertical section through another pill container of the invention.

Figure 11 shows another manner of applying a water impervious coating to the pills,

Figure 12 is a longitudinal section through a pill container of the invention,

Figure 13 is an end view of the pill container of Figure 12,

Figure 14 is a section on line 14 - 14 of Figure 12,

Figure 15 is a plan of another container of the invention,
Figure 16 is a side view of the container of Figure 15 and Figure 17 is an enlarged detail of a part of the housing.

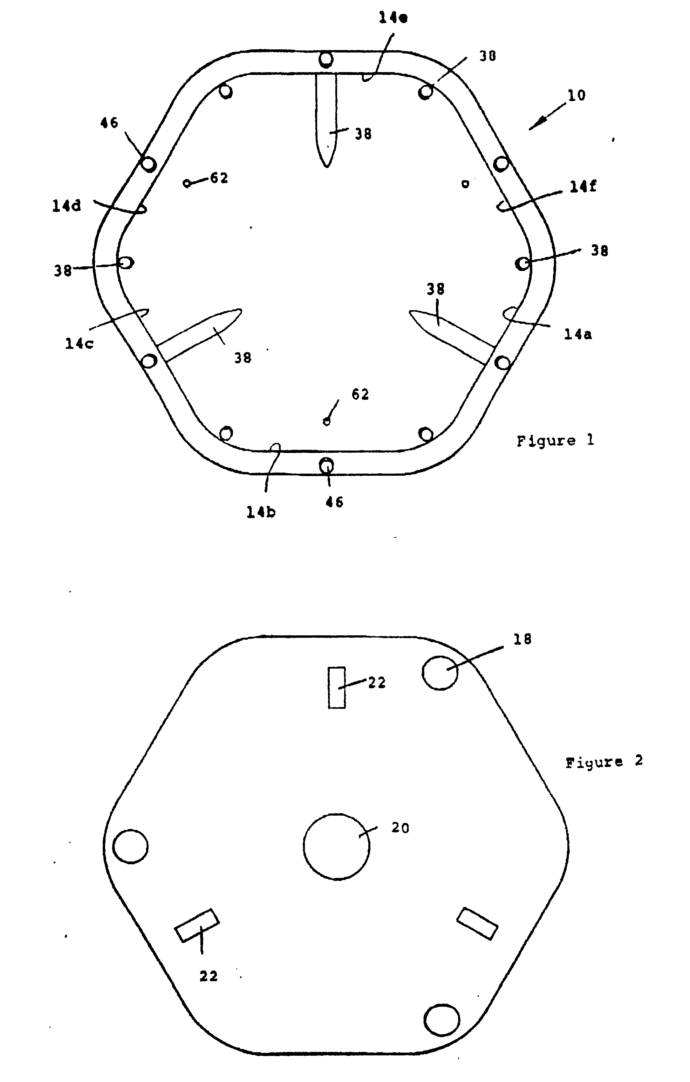

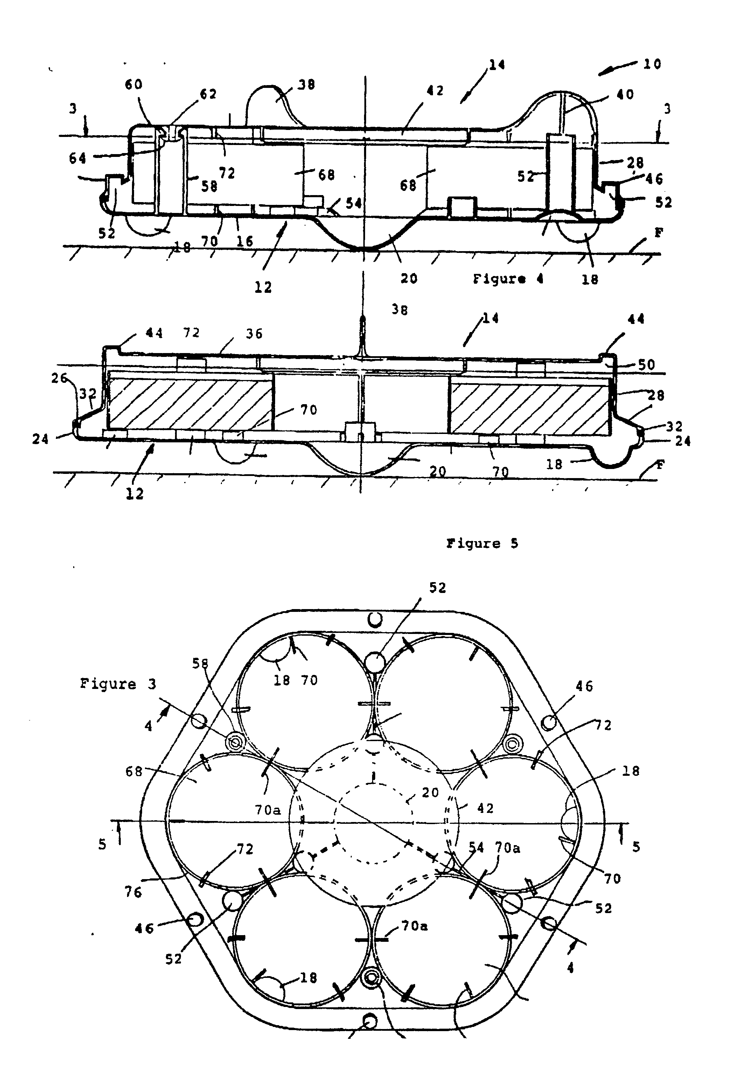

Referring now to Figures 1 to 5, there is shown a pill container 10 of the invention for use in the treatment of water in a swimming pool. The container 10 comprises a moulded plastics body of generally hexagonal cross-section and being formed with a base 12 and a cover 14.

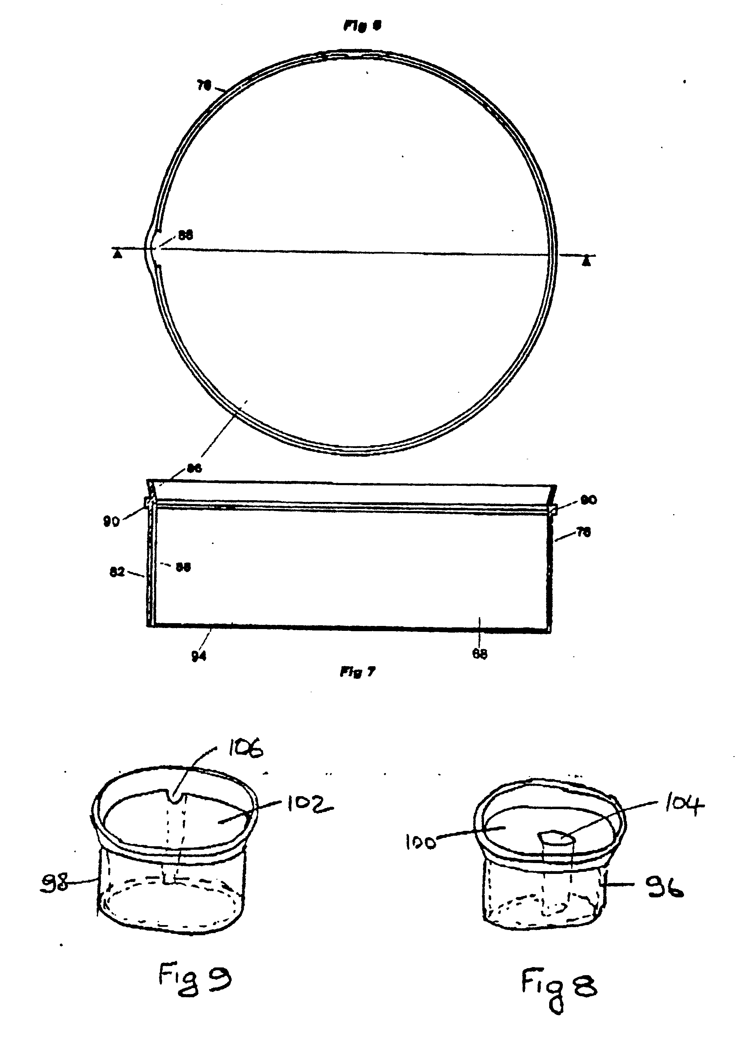

The base 12 is generally of shallow dished construction, the bottom 16 of which constitutes a support surface below which is a set of three equispaced domed cylindrical feet 18 at three spaced apices of the hexagon and a central larger and axially longer domed cylindrical member 20 that depends below the level of the feet 18. Three equispaced, shallow, generally rectangular depressions 22 are located on a pitch circle centred on the central member 20 and located close to the mid-point of the side walls of the hexagon (best shown in Figures 2 and 4). A peripheral wall 24 surrounds the base 12. The wall 24 ends in a projecting tongue 26 for the purpose which will become apparent.

The cover 14 is deeper than the base 12. It has a high side wall 28 with an outwardly directed flange-like bottom portion 30 having an enlarged rim 32 that has a continuous recess 34 in which the tongue 26 of the base 12 is received in a sealed condition.

On its upper surface 36, the cover 14 has three hollow radial fins 38 extending to the middle of three sides 14a, 14c and 14e of the hexagonal cover 14. The fins 38 each have an internal cross-brace 40 (see Figure 4) for the purpose to be disclosed. The fins 38 of a container can be received in the depressions 22 in an upper container when the containers 10 are stacked one above the other for storage purposes. The fins 38 and depressions 22 ensure that the containers 10 are properly aligned during stacking.

In this embodiment, the dimensions of the parts are as follows:- the distance across the flat sides of the cover 14 is 230mm, the distance across the walls 24 is 255mm, the external height of the container body is 44mm, the height of the legs 18 is 12mm, the height of the central member 20 is 18mm, the height of the fins 38 is 24mm and the depth of the depressions 22 is 4mm and their length is 22mm.

Adhered to the underside of the surface 36 is a disc of plastic foam buoyancy material 42.

A set of nodules 44 are provided on the upper surface 36 of the cover 14 at the apices thereof and a further set of nodules 46 are provided on the bottom portion 30 between the apices. When the nodules 44 and 46 are cut off, they leave openings 48 and 50 respectively through which water can pass into and out of the container 10.

The support surface 16 carries respectively mid-way along and close to three of its sides, three hollow pillars 52 that are connected to radial walls 54. The pillars 52 extend up to the underside of the upper surface 36 where the cross-braces 40 bear on them. The walls 54 are no more than 4mm high. Three short hollow pillars 56 are located along the length ofof the walls 54. A further set of hollow tubular pillars 58 are located respectively midway between the pillars 52. At their upper ends, the pillars 58 have internal flanges 60. Hollow projections 62 are provided on the underside of the surface 36. These projections 62 fit into the upper ends of the pillars 58 and have outward flanges 64 that lock against the flanges 60 to secure the parts together. The outer surfaces of the flanges 60 and 64 are inclined to enable them to move past each other more easily with inserting the projections 62 into the pillars 58.

Six pills 68 are received in the container 10 at the corners with each pill 68 located between the pillars 52, 56 and 58. Six additional supports 70 projects radially inwardly from the corners of the container. Two additional supports 70a extend from each side of the walls 54 and are of sufficient length to provide supports for adjacent pills.

Short tongues 72 extend downwardly from the upper surface 36.

Carried on the supports 70 and 70a and located by the side walls 28, the pillars 52, 56 and 58 are six pills 68 of solid trichlororisocyanuric acid (TCIA) material for chlorinating the water in the pool. The tongues 72 hold the pills 68 against upward movement. All the pills 68 are a conventional size of twenty four millemeters thick and of eighty millemeters diameter. The cylidrical periphery 74 of each of the pills has a water impervious collar 76 closely fitting thereon so that in use water in the container will contact only the flat upper and lower surfaces 78 and 80 of the pill 68.

The collar 76 comprises a low density polyethylene moulding consisting of a one millimeter thick sleeve 82 (see Figures 6 and 7) having an axial height of twenty six millimetres and having a four millimeter inwardly tapering inlet section 86 to facilitate feeding the the pill 68 into the collar 76. At one position, the sleeve 82 has an half millimeter thickening and on its inside there is a shallow groove 88 extending from the lower end of the sleeve 82 to near the inlet section 86. The groove 88 is one millimeter deep and two millimeters wide for the purpose which will be described.

On the outside of the collar 76 at the juncture of the inlet portion 86 and the sleeve 82 there is a low one millemeter thick by two millimeter wide peripheral rim 90.

The pill 68 is inserted into the collar 76 as follows. The collar 76 is placed in a mould (not shown) until the stops 90 engage the mould to prevent further movement of the collar 76. A pill 68 is brought to the inlet section 86 to guide it into the sleeve 82. A large flat piston is placed against the flat upper side of the pill and force is applied to move the pill into the sleeve 82 leaving the entrance portion 86 free of the pill. The edges of this portion 86 will, in the assembled container 10, engage the walls 72.

In use, all the nodules 44 and 46 are cut off and the container 10 is immersed in water until sufficient water has entered the openings 48 and 50 to fill the container 10 with water. The container 10 is then released into the pool. Because of the effect of the buoyancy material 42 and the drag of the fins 38, the container 10 will sink in an upright position in the water and will rest with the domed member 20 and one or more of the feet 18 on the floor F of the pool. Water will circulate through the container 10 through the openings 48 and 50. The water will contact the upper and lower surfaces 78 an 80 of the pills 68 within the collars 76. A certain amount of the pill material will dissolve in the water thereby giving off gases or treating the water and, because this water will escape through the upper openings 48, thereby treating the water in the pool.

Should the water in the pool move, as when a swimmer approaches the location of the container 10, the container 10 will rock on the central domed member 20 improving the water flow into and through the container 10.

Any gasses that might accumulate below the pills 68 will escape along the groove 88 to the upper portion of the container where they will escape through the openings 50 formed by cutting off the nodules 44. Thus the possibility of the container inverting because of buoyancy below the pills is minimised or obviated. Also the possibility of the gases forming a barrier to the water engaging the underside 80 of the pill is avoided.

After the pills 68 are substantially absorbed, the buoyancy of the buoyancy material 42, together with the gases trapoed in the hollow fins 38, will be such as to permit the container 10 to rise to the surface of the pool water. The owner of the pool will now know that the container 10 and its pills 68 must be replaced. The spent container 10 can be discarded or left floating in the pool until all the pill material has been used.

Because the container is carried on the domed member 20 and the feet 18 there will always be a sufficient space between the container 10 and the pool bottom for there to be water movement therebetween and further which would prevent the pH of the water falling if the chlorine material is trichloroisocyanuric acid (TCIA) causing iron in the water to precipitate out and stain the floor F of the swimming pool. Should the container invert for any reason, the fins 38 will hold the upper surface 36 of the container off the floor of the pool so that there will be no staining of the pool bottom.

Referring now to Figures 8 and 9 there are shown two modified arrangement of pills and collars in both ar which the collar 96 and 98 is similar to the coil pr 76 but does not have the thickening or groove 88. Instead the pills 100 and 102 respectively are moulded with a through bore 104 and a vertical groove 106 on the periphery.

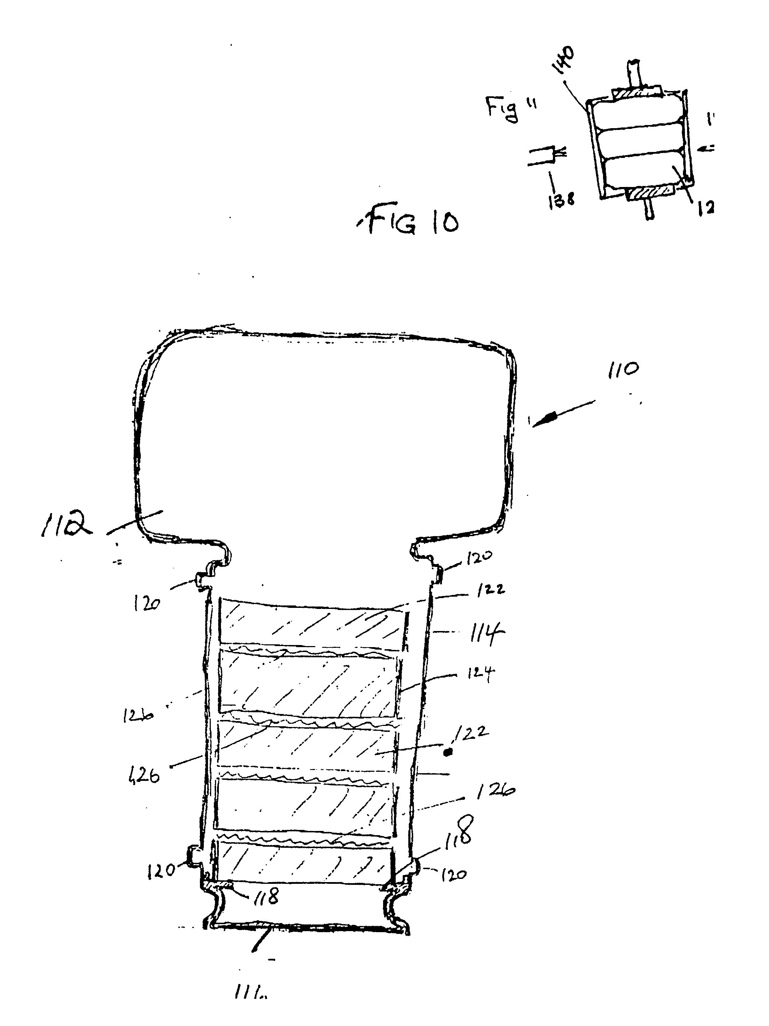

Referring now to Figure 10, there is shown a hollow moulded plastics pill container 110 which is designed to float on the water in the pool. The container 110 comprises an enlarged buoyancy chamber 112 from which depends a central leg 114. The leg 114 is closed off at its bottom end by a lid 116 received therein. Short inwardly directed flanges 118 are formed on the upper part of the lid 116. Nodules 120 are provided at the upper and lower portions of the leg 114. These nodules 120 can be cut off to provide openings to permit water to pass into and through the leg 204.

Within the leg 114 and resting on the flange 118 is received a stack of pills 122 which have their peripheries provided with water impervious coatings 124. The coatings 124 may be sprayed on to the pills 122 or may be separate collars (such as collars 76, 96 or 98 as described above)into which the pills are forced (both as described above). Plastic perforated grids 126 are interspersed between the pills 122 so that water can pass between the pills to be acted upon by and to erode the circular end faces of the pills 122 for the purpose described above.

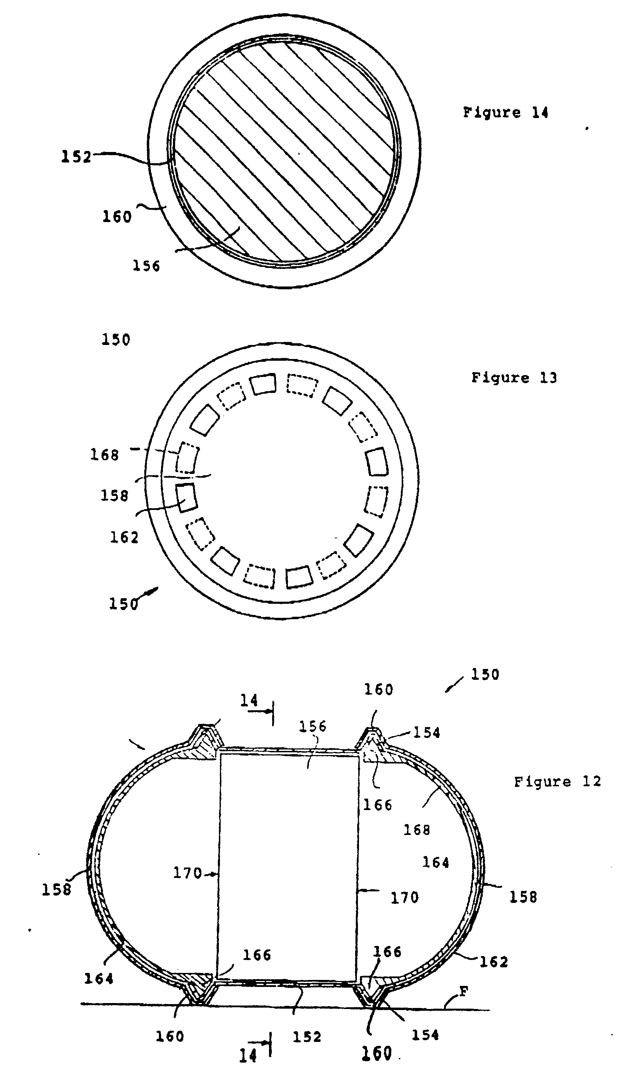

The pills may be spray coated as follows: The pills 122 are arranged in a stack (see Figure 11) of up to ten items (only three shown for simplicity of illustration). The stack is clamped between a pair of members 134 and 136 which are capable of rotating about their axes. A nozzle 138 which is capable of moving in the direction of the axis of the stack is provided to spray a thin coating 140 of polyurethane on to the stack. A separating device 142 is also provided adjacent to the stack 132 and is capable of cutting through the coating 140 to part the coated pills from the stack.

Referring now to Figures 12 to 14, there is shown diagramatically a pill container 150 of the invention for use in the treatment of water in a swimming pool. The pill container 150 comprises a plastics body 152 of generally cylindrical cross-section and relatively small axial length and being formed with a pair of "V"-shaped flanges 154. Fitting closely within the body 152 is a pill comprising a cylindrical pill 156 formed of solid TCIA and having a diameter of 80mm and an axial length of 50mm.

On the ends of the body 152 are a pair of domed end caps 158. Each end cap 158 has a "V"-shaped peripheral flange 160 into which is received the flange 154 in such a manner that the end cap 158 is held firmly on and can be rotated relative to the body 152. A set of spaced apertures 162 arranged in a circular disposition (as best seen in Figure 13) are formed in the end cap 158 at a small distance from the edge.

Fitting closely within each end cap 158 is a dome 164 of foamed styrene that has an enlarged end 166 which fits in the flange 154. The shape of end 166 is such that it is unable to rotate relative to the body 152. The dome 164 has formed therein a set of spaced apertures 168 arranged in a circular disposition so as to be capable of registering with the apertures 162.

The pill container 150 is stored with the end caps 158 located so that the spaces between the apertures 162 are off-set from the apertures 168 in the domes 164. When it is desired to use the pill container 150, the end caps 158 are rotated so that the apertures 162 and 168 register. The container 150 is now thrown into the pool. Water will enter the container 150 through the apertures to react with the end faces 170 of the pill 156. The water thus treated will escape through the apertures 162,168 as will any chlorine gas that may be formed. Such treated water and chlorine gas will mix with the water in the pool and will provide chlorination for the pool.

When the pill 156 has eroded completely or substantially completely, the buoyancy of the pill container 150, provided by the foamed styrene domes 164, will be sufficient to raise the container 150 to the surface of the pool. Thus the pool owner will know that it is time to replace the pill container with a fresh container.

One or more pill containers 150 may be used in a pool depending upon the size of the pills used and the capacity of the pool.

If desired the flow to the sides of the pill can be controlled by maintaining the apertures 162 and 168 slightly out of register to that the flow areas therethrough is reduced.

It will be seen that the body 152 will rest on the flanges 160 which have a diameter about twelve millimetres greater than the end caps 158 and eighteen millimetres larger than the outside diameter of the body 152. Consequently the body 152 will be sufficiently well spaced from the floor F of the pool for there to be adequate water flow below the body. In addition there will only be a small area of contact between the flanges 160 and the floor F. Thus the possibilities of staining the floor by the chemical contents of the pill container will be minimised if not entirely avoided.

The pool container 150 is a convenient item to store and to use.

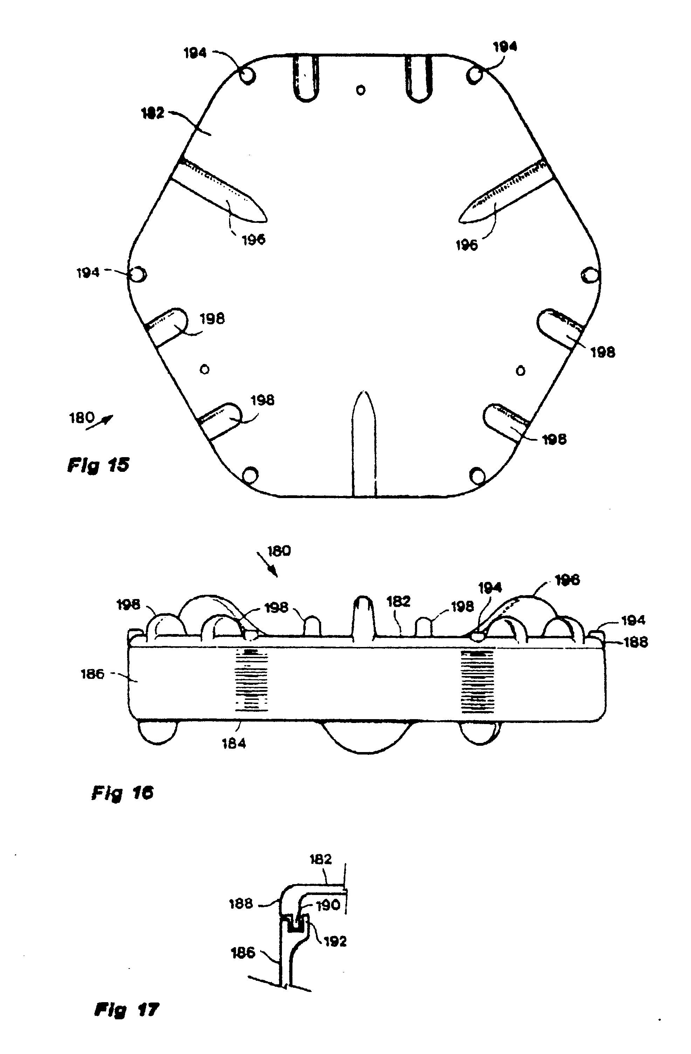

In the modification shown in Figures 15,16 and 17 the container 180 comprises a cover 182 and a base 184. The base 184 has a high peripheral wall 186. The cover 182 has a short dependant peripheral skirt 188 with a longitudinally projecting rim 190 that is received within a groove 192 in the enlarged upper end of the wall 186. Nodules 194 similar to nodules 44 are provided at the apices of the cover 182 being the only nodules provided. Further on the cover there are provided three fins 196 substantially identical to and located in the same places as the fins 38. In addition three pairs of spaced low hollow projections 198 are provided at the edges of the sides of the cover midway between the fins 196. These projections 198 stand about 14mm above the upper surface of the cover 182. If desired, press-outs may be provided in the wall 186 to provide additional openings if it is required to increase the water flow through the container 180. Apart from the foregoing, and as can be seen from Figures 15 and 16 th container and pills are identical to Figures 1 to 5.

it will be seen that should the container 180 turn upside down, it will be supported on the floor of the pool on the crests of the fins 196. If however gasses are formed within the container, these may move to one end of the container and the buoyancy of such gasses may cause that end of the container to rise, in which case the container will rest on the crests of a pair of projections 198 so that there can be sufficient water flow below the container to prevent staining of the pool floor.

Because water acts on the faces only of the pills 68, 100, 102, 122 or 156, their peripheries being protected by the collars 76, 96, 98, 124, 140 or body 152, the pill material is eroded in a constant and controlled manner. Thus, I have found that there will be a much more satisfactory use of the chlorine pills which will last longer than pills used in an uncontrolled manner. This will provide a more even chlorination of the water during the life of the container.

The invention is not limited to the precise constructional details hereinbefore described and illustrated. For example the pills may be of different sizes and cross-sections. They may comprise other water treatment material such as compressed solid acid, algicide or other chemicals including other chlorine material. The container may be loaded with fewer pills if desired. Further an additional pill may be located on the inside edges of the walls 54 between the pillars 56. A different material may be used for coating. The pills may be coated by a different method. The collars can be of different shape and in particular may be provided with dependant feet to hold them off the floor 16 of the base 12. which are aligned with the stops 168 and the projections 172. The method of loading of the collars can vary.

Where the pills 68 are spray coated, the walls 70 may be sharpened to cut into or to distort the coating so that any gases forming under the pills will escape through the cut or distortion.

**Claims**

1. A water treatment pill having a cylindrical periphery and end faces and comprising material that in use is slowly eroded to treat the water wherein the cylinrical periphery is covered with a cover of water impermeable material, the cover being open at both its ends to permit water to come into contact only with both the end faces of the pill.

2. A pill as claimed in claim 1 wherein the cover is a moulded plastics collar.

3. A pill as claimed in claim 2 wherein the collar has a groove running from near its lower end to near its upper end so that any gases which may accumulate below the pill can escape along the groove.

4. A pill as claimed in claim 1 wherein the cover is a coating of the material on the periphery of the pill.

5. A pill as claimed in claim 4 wherein the water impermeable material adheres to the pill.

6. A pill as claimed in claim 4 wherein the coating material is capable of being sprayed on to the pill.

7. A pill as claimed in claim 4 wherein the coating material comprises a polyurethane cement.

8. The combination of a pill as claimed in claim 1 with a container therefore, the container having openings through which water can enter the container to come into contact with both the said faces of the pill and supporting means on which the container can be carried on the floor of a swimming pool in spaced relationship therewith so that water can pass freely between the said floor and nearest side of the container.

9. The combination as claimed in claim 8 including a plurality of pills, covered as aforesaid.

10. The combination as claimed in claim 8 wherein the container comprises a lower surface with locating means thereon to locate the pills within the container.

11. The combination as claimed in claim 8 wherein the container comprises a domed support and surrounding feet on the under surface, the feet being of lesser axial height than the domed support and wherein the container has enlarged fins on its upper surface to support the container spaced from the pool floor should the containre invert.

12. The combination as claimed in claim 8 wherein the container comprises an enlarged buoyancy chamber having a dependant hollow centre piece in which is received pills covered as aforesaid an stacked one upon the other in spaced relationship.

13. The combination of claim 8 wherein the container has a body comprised by the said cover and end parts with openings therein through which water can pass to come into contact with the end faces of the pill.

14. The combination of claim 13 in which the body is cylindrical in shape nad the end parts are in the form of domes.

15. The combination as claimed in claim 14 wherein the end parts are provided with a closure device which closes the openings when the pill container is being stored or transported.

16. The combination as claimed in claim 15 wherein each end part comprises a part fixed to the body and a part rotatable relative to the body, the said parts having openings therein, the said parts being movable from a position in which the openings are in register and another position in which the openings are obturated.

17. A pill as claimed in claim 1 comprising trichloroisocyanuric acid.

18. The combination of a plurality of pills as claimed in claim 17 with a container therefor, the container having openings through which water can enter the container to come into contact with both the said faces of the pill and supporting means on which the container can be carried on the floor of a swimming pool in spaced relationship therewith so that water can pass freely between the said floor and nearest side of the container whereby staining of the pool floor in use caused by the trichloroisocyanuric acid is avoided or minimised.

Figure 1

Figure 2

Figure 4

Figure 5

Figure 3

Fig 6

Fig 7

Fig 9

Fig 8

Fig 11

Fig 10

Figure 14

Figure 13

Figure 12

Fig 15

Fig 16

Fig 17